# EUROPÄISCHE PATENTSCHRIFT

(11) **EP 3 692 012 B1**
(45) Veröffentlichungstag und Bekanntmachung des Hinweises auf die Patenterteilung: **01.11.2023**
(21) Anmeldenummer: 18781999.0
(22) Anmeldetag: 25.09.2018
(51) Int. Cl.: C05F 1/00, C05F 3/00, C05F 5/00, C05F 7/00, C05F 9/04, C02F 11/00

(54) **VERFAHREN ZUR GEWINNUNG VON WERTSTOFFEN**
METHOD FOR RECOVERING VALUABLE SUBSTANCES
PROCÉDÉ DE PRODUCTION DE SUBSTANCES VALORISABLES

(30) Priorität: 03.10.2017 AT 508422017
(43) Veröffentlichungstag der Anmeldung: 12.08.2020
(73) Patentinhaber: DENKGRÜN Energie und Ressourcen GmbH, 1010 Wien (AT)
(72) Erfinder: Schelch, Michael, 8600 Oberaich (AT); Staber, Wolfgang, 8600 Bruck an der Mur (AT)
(74) Vertreter: Vinazzer, Edith
(86) Internationale Anmeldenummer: PCT/EP2018/076020
(87) Internationale Veröffentlichungsnummer: WO 2019/068524

(56) Entgegenhaltungen:
- DE-T2- 60 101 333
- GB-A- 2 383 034

## Beschreibung

Die Erfindung betrifft ein Verfahren zur Gewinnung von Wertstoffen aus in Abfall enthaltenen organischen Verbindungen oder in diesem enthaltenen chemischen Elementen.

Unter den Begriff Abfall fallen im Rahmen der gegenständlichen Erfindung insbesondere Klärschlamm, Gülle, Viehmist, Schlachtabfälle Tiermehl sowie Bioabfall bzw. Biomassen. Solche Abfälle enthalten eine Vielzahl komplexer chemischer Verbindungen und weisen häufig einen sehr hohen Wassergehalt auf. Bestandteile dieser Verbindungen sind beispielsweise Aminogruppen oder Phosphatgruppen, welche zur Gewinnung von Wertstoffen interessante Molekülbestandteile darstellen. Aufgrund des hohen Wassergehaltes der Abfälle sowie der Komplexität der chemischen Verbindungen ist eine wirtschaftliche Verwertung der erwähnten Molekülbestandteile, insbesondere eine Gewinnung von Wertstoffen aus diesen Molekülbestandteilen, aktuell nur schwer möglich. Die Problematik wird zusätzlich durch etwaige in den Abfällen enthaltene Schwermetalle und/oder Schwermetallsalze verschärft.

Klärschlamm enthält beispielsweise zur Düngung geeigneten Stickstoff und Phosphor, weist jedoch häufig einen hohen Gehalt an Schwermetallen und/oder Rückstände von Arzneimitteln auf und kann daher nicht oder nur bedingt direkt als Düngemittel eingesetzt werden. Aktuell unterliegt die Verwendung von Klärschlamm als Düngemittel in Europa einer Richtlinie, welche die Grenzwerte von Schwermetallkonzentrationen festlegt. Mitunter ist das Ausbringen von Klärschlamm als Düngemittel regional sogar verboten. Ein Separieren der Schwermetalle oder/und Schwermetallsalze aus Klärschlamm ist aktuell mit einem wirtschaftlich vertretbaren Aufwand nicht möglich.

Nicht als Dünger verwertbarer Klärschlamm wird derzeit verbrannt oder vergast. Der hohe Wasseranteil des Klärschlamms macht dies zu einer äußerst energieintensiven und meist unwirtschaftlichen Verwertung. Der bei der Eindampfung von Klärschlamm entstehende Brüden ist zusätzlich meist aufwendig nachzubehandeln. Insbesondere gehen bei der Eindampfung auch die in den komplexen chemischen Verbindungen eingebundenen, zur Wertstoffgewinnung geeigneten Molekülbestandteile verloren.

Neben Klärschlamm ist auch die Verwertung bzw. Aufbereitung einer Vielzahl weiterer Abfälle, wie insbesondere die eingangs bereits erwähnten Abfälle, sehr problematisch. Zusätzlich sind die Abfälle häufig von pastöser oder fester Konsistenz, sodass diese nur bedingt pumpfähig sind und die Handhabung der Abfälle auch eine logistische Herausforderung darstellt.

Aus der DE 601 01 333 T2 ist ein Verfahren zur Behandlung eines Phosphor, gegebenenfalls Stickstoff und/oder organische Materialen und/oder Schwermetalle enthaltenden Abfalls bekannt. Der Abfall wird mit einer Base vermischt, wodurch - je nach Zusammensetzung des Abfalls - Phosphor, organische Materialen und Schwermetalle ausgefällt werden und ein Teil des Stickstoffes als Ammoniak verflüchtigt wird. Das aus dem Abfall und der Base gebildete Medium wird einer Elektroflockung unterzogen.

Ferner ist aus der GB 2 383 034 A ein Verfahren zur Behandlung einer ein Ammoniumsalz oder Ammoniak enthaltenden Flüssigkeit bekannt. Bei diesem Verfahren wird zunächst die Flüssigkeit derart mit einer Base vermischt, dass der pH-Wert der Flüssigkeit auf über 9 ansteigt. Durch Strippung wird das in der Flüssigkeit enthaltene Ammoniak in einen Gasstrom übergeführt, aus welchem das Ammoniak anschließend beispielsweise mittels eines Ionenaustauschers entfernt wird.

Der Erfindung liegt daher die Aufgabe zugrunde, ein Verfahren zur Verfügung zu stellen, welches die erwähnten bei der Verwertung von Abfällen bestehenden Nutzungshemmnisse beseitigt und derart eine wirtschaftliche Gewinnung von Wertstoffen aus den Abfällen ermöglicht.

Die gestellte Aufgabe wird erfindungsgemäß durch ein Verfahren der eingangs genannten Art mit folgenden nacheinander ablaufenden Schritten gelöst:
a) Vermischen des Abfalls mit einer Base, sodass ein flüssiges Medium gebildet wird,
b) Erwärmen des Mediums in einem Reaktor auf eine Temperatur von 100°C bis 140°C zum Hydrolysieren der im Medium enthaltenen organischen Verbindungen und Abzug des sich bildenden Brüdens,
   b1) Weiterleiten des Brüdens vom Reaktor in eine Waschkolonne,
   b2) Versetzen des Brüdens mit Schwefelsäure oder Phosphorsäure zur Bildung von Ammoniumsulfat(en) bzw. Ammoniumphosphat(en), wobei im Sumpf der Waschkolonne eine Lösung erhalten wird und der Brüden aus dem Kopf der Waschkolonne abgeleitet wird,
   b3) Weiterleiten der in Schritt b2) erhaltenen Lösung in eine elektrochemische Zelle mit einem Kathodenraum und einem Anodenraum und Elektrolysieren der Lösung, wobei im Anodenraum Schwefelsäure bzw. Phosphorsäure für Schritt b2) gewonnen wird, b4) Rückleiten der gewonnenen Schwefelsäure bzw. Phosphorsäure aus dem Anodenraum in die Waschkolonne und Ableiten von im Kathodenraum gebildeten Wertstoffen, insbesondere einer Ammoniaklösung,
c) Weiterleiten des in Schritt b) im Reaktor zurückbleibenden flüssigen Mediums in eine Trennvorrichtung zur Abtrennung einer etwaig im flüssigen Medium enthaltenen festen anorganischen Phase.

Durch die Schritte a) und b) des erfindungsgemäßen Verfahrens werden die organischen Verbindungen des Abfalls in einem flüssigen Medium in Lösung gebracht, sodass ein sehr gut transportierbares Medium erhalten wird. Da die Hydrolyse gemäß Schritt b) bei einer Temperatur von 100° bis 140°C durchgeführt wird, werden aus den im Medium enthaltenen organischen Verbindungen zersetzungsfrei sowie mit einem hohen Umsetzungsgrad organische Salze gebildet, welche sich im flüssigen Medium lösen. Zumindest der Großteil etwaiger noch nicht hydrolysierter organischer Verbindungen weist eine geringere Dichte als das sonstige flüssige Medium auf, sodass diese oben auf dem Medium aufschwimmen. Aus dem in Schritt b) gebildeten Brüden können Wertstoffe gewonnen werden, beispielsweise aus einem stickstoffhaltigen Brüden eine Ammoniaklösung.

Durch die Schritte b1) und b2) werden im Sumpf der Waschkolonne eine Ammoniumsulfat(e) bzw. eine Ammoniumphosphat(e) enthaltende Lösung erhalten und ein von Stickstoffverbindungen freier Brüden gebildet. Durch die Zugabe der Säure (Phosphorsäure bzw. Schwefelsäure) wird die Lösung ferner angesäuert, sodass sich das Gleichgewicht NH₃ + H₃O⁺ ⇄ NH₄⁺ + H₂O auf Seite der Ammoniumionen (NH₄⁺) bzw. der Ammoniumsalze verschiebt. Die Ammoniumionen sind - im Gegensatz zu den Ammoniumphosphaten bzw. Ammoniumsulfaten einer Elektrolyse sehr gut zugänglich, passieren in der elektrochemischen Zelle die in dieser befindlichen Membran und gelangen derart in den Kathodenraum, in welchem aus diesen eine Ammoniaklösung gebildet wird.

Durch Schritt b3) wird die in Schritt b2) eingesetzte Säure sofort zurückgewonnen. Diese stellt einen Wertstoff dar und wird in Schritt b4) gleich wieder entsprechend zurückgeleitet. Ferner werden im Zuge des Schrittes b3) im Anodenraum als weitere Wertstoffe insbesondere eine Ammoniaklösung und Wasserstoff gewonnen, welche gemäß b4) abgeleitet werden.

Das in Schritt b) zurückbleibende Medium ist weiterhin gut fließfähig und weist daher eine geringe Viskosität auf. Etwaige anorganische Bestandteile sedimentieren bereits in Schritt b) im Reaktor, wodurch diese in Schritt c) sehr effektiv abgetrennt werden. Die durch Schritt c) erhaltene anorganische Fraktion enthält im Medium unlösliche anorganische Bestandteile, beispielsweise Schwermetallsalze, Kieselsteine oder Sand. Insbesondere werden etwaige Schwermetallsalze quantitativ aus dem Medium abgetrennt. Aus der anorganischen Fraktion sind Wertstoffe, insbesondere etwaige Schwermetalle, gewinnbar. Im Gegensatz zu der bei einer Verbrennung zurückbleibenden Asche, sind etwaige in der anorganischen Fraktion enthaltene Schwermetallsalze nicht in einer anorganischen Matrix eingebunden, sodass die weitere Aufbereitung der anorganischen Fraktion auf einfachere Weise möglich ist. Durch die frühzeitige Abtrennung etwaiger anorganischer Bestandteile ist nachfolgend zusätzlich eine zumindest weitgehend von Nebenrektionen freie weitere Aufbereitung des noch organische Verbindungen enthaltenden Mediums möglich. Außerdem können nachfolgend aus dem Medium, insbesondere durch weitere bevorzugte Verfahrensvarianten der Erfindung, aschefrei verbrennbare organische Verbindungen gewonnen werden.

Mittels des erfindungsgemäßen Verfahrens gelingt es daher, die bisher bestehenden Nutzungshemmnisse, wie zum Beispiel im Abfall enthaltene Schwermetalle und den häufig sehr großen Wassergehalt des Abfall, zu beseitigen, wodurch eine wirtschaftliche Gewinnung einer Vielzahl von Wertstoffen aus in Abfall enthaltenen chemischen Verbindungen ermöglicht ist.

Im Nachfolgenden wird auf bevorzugte Varianten des Verfahrens eingegangen.

Insbesondere wird in Schritt a) bereits im Reaktor oder in einem separaten Mischer durchgeführt, wobei vorzugsweise in Schritt a) der Abfall und die Base auf 60°C bis 70°C erwärmt werden. Besonderes bevorzugter Weise wird Schritt a) in einem separaten Mischer durchgeführt, wodurch zuerst das Medium gebildet und anschließend in Reaktor eingebracht wird. Dieses lässt sich besonders gut transportieren. Ferner ist es bevorzugt, wenn in Schritt a) der Abfall und die Base auf 60°C bis 70°C erwärmt werden. Dadurch wird die Pumpfähigkeit des Mediums verbessert, wobei im Medium bereits erste, andernfalls erst in Schritt b) stattfindende, Zersetzungsreaktionen der organischen Verbindungen ablaufen können.

Bevorzugter Weise wird in Schritt a) der Abfall mit einer wässrigen Kaliumhydroxidlösung, einer wässrigen Natriumhydroxidlösung, einer wässrigen Kaliumcarbonatlösung, einer wässrigen Natriumcarbonatlösung oder mit einer Mischung von zumindest zwei dieser Lösungen vermischt. Insbesondere enthalten die in Frage kommenden Abfälle, beispielsweise Klärschlamm, selbst häufig Kalium. Diese Basen sind bekannte Industriechemikalien, deren Handhabung vorteilhafterweise gut erprobt und unproblematisch ist.

Ferner ist es bevorzugt, wenn in Schritt a) die Menge und/oder die Konzentration der Base derart gewählt werden bzw. wird, dass das gebildete flüssige Medium einen pH-Wert von 9,0 bis 14,0, insbesondere von mindestens 12,0, aufweist, wobei vorzugsweise das Mengenverhältnis von im Abfall enthaltener Trockensubstanz zur Base 1:1 bis 1:2 beträgt. Dadurch werden die organischen Verbindungen in besonders großem Umfang hydrolysiert.

Zusätzlich werden bei diesem pH-Wert, insbesondere in Kombination mit der in Schritt b) stattfindenden Erwärmung des Mediums auf über 100°C, sämtliche oder nahezu sämtliche Mikroorganismen abgetötet.

In Schritt b) wird das flüssige Medium vorzugsweise unter Rühren auf seine Siedetemperatur erwärmt. Die etwaige Gefahr von Siedeverzügen wird dadurch reduziert.

Gemäß einer weiteren bevorzugten Variante wird in Schritt b) eine Sulfidlösung, insbesondere eine Kaliumsulfid- oder eine Natriumsulfidlösung, zugesetzt. Sulfide lösen sich im flüssigen Medium und bilden gemeinsam mit etwaigen im Medium vorhandenen Schwermetallen schwerlösliche Schwermetallsulfide, welche im Medium ausfallen. Die ausgefällten Schwermetalle werden im nachfolgenden Schritt c) abgetrennt und sind Bestandteil der erwähnten festen anorganischen Phase. Die Zugabe einer Sulfidlösung ist insbesondere dann von Vorteil, wenn der eingesetzte Abfall einen hohen Schwermetallgehalt aufweist und/oder frei von schwefelhaltigen Verbindungen ist. Da in Schritt a) bevorzugt bereits Kaliumhydroxidlösung oder Natriumhydroxidlösung eingesetzt wird, ist als Sulfidlösung Kaliumsulfid- bzw. Natriumsulfidlösung besonders bevorzugt.

Gemäß einer bevorzugten Variante wird in Schritt b3) Wasser in den Kathodenraum eingeleitet. Dies bewirkt einen osmotischen Druckgradienten, welcher eine Strömung vom Kathodenraum zum Anodenraum erzwingt, wodurch die Diffusion von restlichen organischen Anionen von Anodenraum in den Kathodenraum verhindert wird. Dadurch wird die Membran zwischen Anoden- und Kathodenraum sauber gehalten und die Menage an im Anodenraum zurückgewonnener Säure erhöht.

Bevorzugter Weise wird der in Schritt b2) abgeleitete Brüden verdichtet und anschließend in Schritt b) zum Erwärmen des Mediums im ersten Reaktors eingesetzt. Durch das Verdichten werden die Temperatur und der Druck des Brüdens erhöht. Durch die Druckerhöhung des Brüdens steigt die Siedetemperatur des im Brüden enthaltenen Wassers, sodass der Wasserdampf des Brüdens bei einer Temperatur > 100°C kondensiert. Die Phasenumwandlungswärme des im flüssigen Medium enthaltenen Wassers wird derart zurückgewonnen und zum Erwärmen des im ersten Reaktor befindlichen Mediums einer nachfolgenden Charge auf die für die Hydrolyse erforderliche Temperatur eingesetzt.

Die in Schritt c) abgetrennte feste anorganische Phase wird vorzugsweise gemäß folgender nacheinander ablaufender Schritte verwertet:
c1) Waschen der festen anorganischen Phase mit Wasser,
c2) Rückleiten der in Schritt c1) erhaltenen Waschlösung in den in Schritt b) verwendeten ersten Reaktor,
c3) Austragen der in Schritt c1) zurückbleibenden anorganischen Phase.

Durch Schritt c1) werden etwaige in die feste anorganische Phase mitverschleppten organischen Salze aus dieser herausgelöst. Diese Waschlösung wird gemäß c2) in den ersten Reaktor zurückgeleitet, sodass diese organischen Salze in den eigentlichen Aufbereitungsprozess eingebracht und aus diesen wie bereits beschrieben ebenfalls weitere Wertstoffe gewonnen werden. Aus der schwermetallhaltigen anorganischen Fraktion können, wie bereits erwähnt, ebenfalls Wertstoffe gewonnen werden.

Gemäß einer bevorzugten Verfahrensvariante werden nach Schritt b) und vor Schritt c) oder nach Schritt c) folgende Schritte nacheinander durchgeführt:
d) Weiterleiten des in Schritt b) bzw. des in Schritt c) erhaltenen flüssigen Mediums in einen zweiten Reaktor,
e) Erwärmen des Mediums im zweiten Reaktor auf eine Temperatur von 50°C bis 80°C unter einem absoluten Druck von 0,02 bar bis 0,9 bar und Abzug des sich bildenden Brüdens.

Gemäß dieser beiden Verfahrensvarianten, ist es daher vorgesehen, das Medium in einen zweiten Reaktor weiterzuleiten und dort unter Vakuum zu erhitzen. Es ist dabei möglich, Schritt c) - die Abtrennung einer etwaigen im flüssigen Medium enthaltenen festen anorganischen Phase - zu unterschiedlichen Verfahrenszeitpunkten, nämlich vor oder nach dem Weiterleiten des Mediums in den zweiten Reaktor durchzuführen. Das Vorsehen eines zweiten Reaktors ist insbesondere dann vorteilhaft, wenn das Medium einen hohen Wassergehalt aufweist. Insbesondere wird dadurch bei Medien mit einem sehr hohen Wassergehalt, wie beispielsweise bei Klärschlamm oder Gülle, eine besonders starke Aufkonzentrierung der organischen Verbindungen im Medium ermöglicht.

Durch die in Schritt e) im Vergleich zu Schritt b) gewählte geringere Temperatur von maximal 80°C ist sichergestellt, dass die bei der zuvor durchgeführten Hydrolyse (Schritt b)) gebildeten organischen Verbindungen nicht zersetzt werden und daher unverändert im flüssigen Medium verbleiben. Aus dem in Schritt e) gebildeten Brüden können, analog zu dem bereits in Schritt b) gebildeten Brüden, Wertstoffe gewonnen werden. Das nach Schritt e) erhaltene flüssige Medium enthält in besonderes hoher Konzentration organische Verbindungen und ist einer weiteren Aufbereitung, beispielsweise einer Destillation, gut zugänglich, sodass weitere Wertstoffe gewonnen werden können.

Der in Schritt e) gebildete Brüden wird vorzugsweise gemäß folgender nacheinander ablaufender Schritte verwertet:
e1) Weiterleiten des Brüdens vom zweiten Reaktor in eine zweite Waschkolonne,
e2) Versetzen des Brüdens mit Schwefelsäure oder Phosphorsäure zur Bildung von Ammoniumsulfat(en) bzw. Ammoniumphosphat(en), wobei im Sumpf der Waschkolonne eine Lösung erhalten wird,
e3) Weiterleiten der in e2) erhaltenen Lösung in eine elektrochemische Zelle mit einem Kathodenraum und einem Anodenraum und Elektrolysieren der Lösung, wobei im Anodenraum Schwefelsäure bzw. Phosphorsäure für Schritt e2) gewonnen wird,
e4) Rückleiten der gewonnenen Schwefelsäure bzw. Phosphorsäure aus dem Anodenraum in die Waschkolonne und Ableiten der im Kathodenraum gebildeten Wertstoffe, insbesondere einer Ammoniaklösung.

Die Verwertung dieses Brüdens verläuft daher analog zur Verwertung des in Schritt b) erhaltenen Brüdens.

Gemäß einer bevorzugten Ausführungsvariante der Erfindung wird das nach dem letzten der Schritte a) bis e) - je nach Reihenfolge das nach Schritt c) oder das nach Schritt e) - erhaltene flüssige Medium gemäß folgender nacheinander ablaufender Schritte verwertet:
f) Weiterleiten, insbesondere kontinuierliches Weiterleiten, des flüssigen Mediums in einen dritten Reaktor,
g) Vermischen des Mediums mit einem Wärmeträgeröl und Erwärmen des Mediums auf 220°C bis 380°C, insbesondere auf höchstens 300°C, vorzugsweise auf höchstens 230°C, unter einem absoluten Druck von 0,02 bar bis 0,9 bar,
h) Ableiten des in Schritt g) gebildeten Brüdens und Verwerten des Brüdens,
i) Ableiten der in Schritt h) verbleibenden Suspension aus Wärmeträgeröl und einer festen organischen Phase und Verwerten der Suspension.

Das in Schritt e) zurückbleibende Medium ist meist von sehr zähflüssiger Konsistenz. Durch Schritt g) wird das zähflüssige Medium im Wärmeträgeröl dispergiert, wodurch eine sehr gute Wärmeübertagung auf das zähflüssige Medium ermöglicht ist. Der gebildete Brüden enthält organische Verbindungen, insbesondere Alkane, Ketone, Ester, Alkohole und Ether, und ist somit reich an Wertstoffen. Aus der zurückbleibenden Suspension können insbesondere gemäß weiterer bevorzugter Ausführungsvarianten der Erfindung, wie nachfolgend noch erläutert wird, ebenfalls Wertstoffe gewonnen werden.

Der gemäß Schritt h) abgeleitete Brüden wird vorzugsweise gemäß folgender nacheinander ablaufender Schritte verwertet:
h1) Ableiten des gebildeten Brüdens in eine Destillationskolonne,
h2) Abkühlen des Brüdens, insbesondere durch Einsprühen von Wasser, in der Destillationskolonne zur Kondensation organsicher Verbindungen,
h3) Ableiten der in Schritt h2) kondensierten organischen Verbindungen und Ableiten des in Schritt h2) zurückbleibenden Brüdens.

Die Destillationskolonne wird daher derart betrieben, dass organische Verbindungen, welche einen geringeren Dampfdruck als Wasser aufweisen, im Sumpf der Destillationskolonne anfallen und ein hauptsächlich Wasserdampf enthaltender Brüden in den Kopf der Destillationskolonne aufsteigt. Die organischen Verbindungen stellen einen weiteren Wertstoff dar, welcher insbesondere direkt zur Energiegewinnung oder zur Gewinnung weiterer Wertstoffe genutzt wird. Der zurückbleibende Brüden enthält insbesondere Spaltgase, welche thermisch oder stofflich verwertet werden, beispielsweise in Wärmekraftmaschinen mit innerer Verbrennung, wie beispielsweise Gasmotoren, Dieselmotoren oder Gasturbinen.

Die gemäß Schritt i) abgeleitete Suspension aus Wärmeträgeröl und fester organischer Phase wird vorzugsweise gemäß folgender nacheinander ablaufender Schritte verwertet:
i1) Ableiten der Suspension in einen Abscheider und Zuführen einer wasserhaltigen Phase, wobei sich im Abscheider eine wässrige Phase und eine auf dieser aufschwimmende Phase bilden,
i2) Rückleiten der aufschwimmenden Phase aus dem Abscheider in den dritten Reaktor und Weiterleiten der wässrigen Phase in eine Konvertierungsvorrichtung,
i3) Konvertieren von in der wässrigen Phase gelösten polaren organischen Salzen in der Konvertierungsvorrichtung zu organischen Verbindungen, insbesondere Kohlenwasserstoffen und Kohlenstoffdioxid, sowie zu Wasserstoff,
i4) Rückleiten des in Schritt i3) erhaltenen flüssigen Mediums in den Abscheider, welches insbesondere die unter Schritt i) erwähnte wasserhaltige Phase ist.

Die feste organische Phase wird von organischen Salzen gebildet. Diese sind zunächst der Destillation nicht zugänglich. Durch Schritt i1) werden diese organischen Salze in eine wässrige Phase überführt. Durch Schritt i3) werden aus den organischen Salzen weitere destillierbare organische Verbindungen gewonnen. Durch Schritt i4) kommen diese in Kontakt mit dem Wärmeträgeröl (aufschwimmende Phase), in welchem sie eluiert werden. Gemäß Schritt i2) wird das Wärmeträgeröl und damit die gewonnen weiteren destillierbaren organischen Verbindungen in den dritten Reaktor zurückgeführt. Die weitere Aufbereitung (Wertstoffgewinnung) erfolgt dann gemäß den bereits erwähnten Schritten g) und h) sowie vorzugsweise gemäß den Schritten h1) bis h3).

Zur Gewinnung weiterer Wertstoffe ist gemäß einer weiteren bevorzugten Variante vorgesehen, dass die in Schritt i1) gebildete wässrige Phase, vorzugsweise nach zumindest einmaligem Durchführen der Schritte i3) und i4), in eine elektrochemische Zelle mit zwei durch eine Alkalimetall-Ionen durchlässige Membran voneinander getrennten Halbzellen gleitet und in dieser elektrolysiert wird. Die wässrige Phase enthält noch Kaliumcarbonat, gegebenenfalls Reste an Kaliumhydroxid und insbesondere auch noch Kaliumphosphat und stellt eine Elektrolytlösung dar. Durch Anlegen von Gleichstrom/Gleichspannung wird an der Kathode Wasserstoff und Kaliumhydroxid gebildet. Aus Kaliumhydroxid bildet sich Kalilauge. An der Anode wird Phosphorsäure und Sauerstoff gebildet. Die gewonnene Kalilauge wird vorzugsweise in Schritt a) eingesetzt. Etwaiger Überschuss an Kalilauge wird insbesondere kommerziell verwertet. Die Phosphorsäure kann beispielsweise zu den Waschkolonnen (Schritt b2) und Schritt e2)) geleitet werden. Der gewonnene Wasserstoff stellt bekannter Weise ebenfalls einen Wertstoff dar und eignet sich beispielsweise bestens zur Energiegewinnung in einem Verbrennungsmotor oder in einer Brennstoffzelle.

Gemäß alternativer bevorzugter Varianten wird das in Schritt b), vorzugsweise das in Schritt c), erhaltene flüssige Medium bei einer Temperatur von höchstens 500°C pyrolysiert oder vergast, insbesondere mittels einer Flugstromvergasung, einer Wirbelschichtvergasung oder einer Festbettvergasung, vorzugsweise einer Gegenstrom-Festbettvergasung, oder verbrannt. Da das Medium zuvor mittels einer Trennvorrichtung (Schritt c) gefiltert wurde, ist das Medium vorteilhafterweise frei von etwaigen schwermetallhaltigen anorganischen Verbindungen. Da das Medium, mit Ausnahme von Alkaliverbindungen, ferner frei von sämtlichen anorganischen Komponenten ist, läuft die Pyrolyse ohne oder zumindest weitgehend ohne Nebenreaktionen ab, sodass im Vergleich zu herkömmlichen Pyrolysen deutlich höhere Ausbeuten an flüssigen Produkten erzielt werden. Das Durchführen der genannten thermischen Verfahren mit dem Medium, aus welchem zuvor gemäß Schritt c) eine etwaige feste anorganische Phase abgetrennt wurde, ist von Vorteil, da die thermischen Verfahren bei diesen Varianten ohne oder weitgehend ohne Nebenreaktionen ablaufen. Derart werden gegenüber herkömmlichen thermischen Verfahren besonders hohe Ausbeuten an Wertstoffen erzielt.

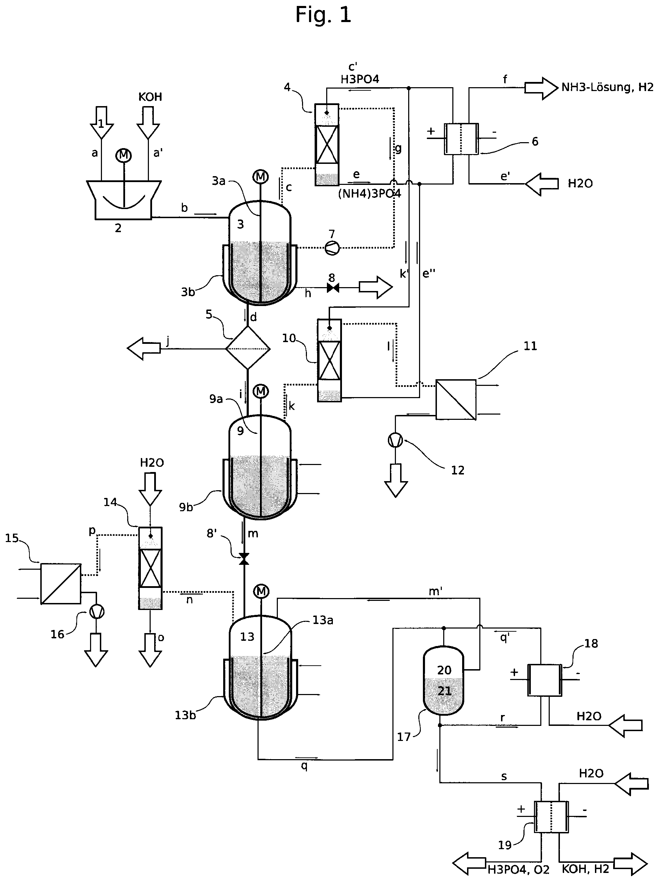

Weitere Merkmale, Vorteile und Einzelheiten der Erfindung werden nun anhand der einzigen Figur, Fig. 1, die ein schematisches Fließbild eines Verfahrens gemäß einer Ausführungsvariante der Erfindung zeigt, näher beschrieben.

Im Rahmen der gegenständlichen Erfindung umfasst der Begriff "flüssiges Medium" Flüssigkeiten, Suspensionen und Emulsionen sowie Gemische aus Suspensionen und Emulsionen.

Die Erfindung befasst sich mit einem Verfahren zur Gewinnung von Wertstoffen aus in Abfall enthaltenen organischen Verbindungen oder in diesem enthaltenen chemischen Elementen. Geeignete organische Verbindungen sind insbesondere Triacylglycerole (Fette und fette Öle), Proteine, Kohlenhydrate oder Lignine. Die in Abfall enthaltenen, zur Wertstoffgewinnung geeigneten chemischen Elemente sind insbesondere Stickstoff, Phosphor und/oder Kalium, welche meistens Bestandteile der Moleküle der organischen Verbindungen sind. Sie befinden sich daher in einer "organischen Matrix". Stickstoff befindet sind beispielsweise in den Aminosäuren von Proteinen. Organische Phosphate, wie zum Beispiel Phospholipide, welche bekannter Weise Bestandteile von Zellmembranen sind, Nucleinsäuren oder in Mais und Sojaresten befindliche Phytate, enthalten Phosphor in gebundener Form. Ferner können in Abfall auch anorganische Phosphate, beispielsweise aus Tierknochen stammendes Calciumphosphat, enthalten sein. Häufig sind die Abfälle auch mit Schwermetallen belastet, beispielsweise können Abwässer aus Bioabfallvergärungsanlagen Kupfer oder Zink enthalten.

Ein in Frage kommender Abfall ist beispielsweise Gülle, welche Kalium als Kaliumsalze, Stickstoff als Amine oder Ammonium (NH₄) und Phosphor als Phosphat(e) enthält. Weitere zur Gewinnung von Wertstoffen geeignete Abfälle sind insbesondere Abfälle aus Schlachthöfen oder Klärschlamm, wobei Klärschlamm Phosphor, Kalium und Stickstoff in gebundener Form enthält. Stickstoff ist insbesondere in Aminen eingebunden.

Bevorzugter Weise ist der Abfall ein biogener Abfall (Abfall biogener Herkunft). Die nachfolgende Tabelle (Tabelle 1) enthält zu einigen biogenen Abfällen Informationen über ihre übliche Trockenmasse sowie die Massenanteile an Kalium, Stickstoff und Phosphor. Die angegebenen Zahlenwerte verstehen sich als Richtwerte.

**Tabelle 1**

| Abfall | Trockenmasse [%] | Kaliumgehalt [%] | Stickstoffgehalt [%] | Phosphorgehalt [%] |
|---|---|---|---|---|
| kommunaler Klärschlamm | 20 | 0,5 | 6 | 6 |
| Schweinegülle | 5 | 3,5 | 5 | 3,5 |
| Hühnerkot | 50 | 25 | 24 | 20 |
| Gärreste aus Biogas | 5 | 4 | 5 | 2 |

Zwischen den einzelnen Schritten des Verfahrens passiert ein aus dem Abfall gebildetes flüssiges Medium, nacheinander unterschiedliche Vorrichtungen und wird in diesen aufbereitet. Stoffströme a bis s sowie Stoffströme a', c', e', k', m', q` und e" versinnbildlichen in Fig. 1 den Transport des flüssigen Mediums bzw. den Transport von aus dem Medium abgetrennten Bestandteilen. Ströme, welche mit gleichem Buchstaben, wie beispielsweise a, a', bezeichnet sind, fließen in dieselbe Vorrichtung bzw. denselben Vorrichtungsbestandteil. Zum Transport der Medien bzw. seiner Bestandteile sind insbesondere Rohre, Pumpen, Absperreinrichtungen, wie beispielsweise Ventile, und dergleichen vorgesehen.

Wie in Fig. 1 angedeutet, wird der jeweilige Abfall 1 in einen Mischer 2 eingebracht (Stoffstrom a), in welchen eine wässrige Kaliumhydroxidlösung ("Kalilauge", Stoffstrom a') eingeleitet und mit dem Abfall vermischt wird, sodass ein flüssiges, pumpfähiges Medium gebildet wird. Etwaige im Mischer 2 stattfindende Zersetzungsreaktionen der im Abfall enthaltenen organischen Verbindungen tragen zu einer Homogenisierung des Mediums bei und verbessern seine Pumpfähigkeit. Bevorzugter Weise wird das Medium im Mischer 2 auf beispielsweise 60° bis 70°C erwärmt, um die Zersetzungsreaktionen zu beschleunigen bzw. zu begünstigen. Die Menge an zugeführter Kaliumhydroxidlösung und/oder die Konzentration der Kaliumhydroxidlösung ist bzw. sind vorzugsweise derart gewählt, dass das gebildete flüssige Medium einen pH- Wert von 9,0 bis 14,0, insbesondere von mindestens 12,0, aufweist. Besonders bevorzugter Weise beträgt das Mengenverhältnis von im Abfall enthaltener organischer Trockensubstanz zu Kaliumhydroxid 1:1 bis 1:2. Das erhaltene homogenisierte flüssige Medium wird in einen Hydrolysereaktor 3 weitergeleitet (Stoffstrom b). Der Abfall 1 und die wässrige Kaliumhydroxidlösung können auch direkt, also ohne zuvor im Mischer 2 miteinander vermischt worden zu sein, insbesondere über ein Schleusensystem, in den Hydrolsereaktor 3 eingebracht werden.

Der Hydrolysereaktor 3 weist ein Rührwerk 3a und einen Heizmantel 3b auf und wird vorzugsweise unter Umgebungsdruck und daher bei einem absoluten Druck von zirka 1,0 bar betrieben. Insbesondere kann der Hydrolysereaktor 3 bei einem absoluten Druck von 0,02 bar bis 1,0 bar betrieben werden. Im Hydrolysereaktor 3 wird das flüssige Medium unter Rühren auf 100°C bis 140°C, insbesondere auf höchstens 120°C, erwärmt, wodurch sämtliche im Medium enthaltenen organischen Verbindungen alkalisch hydrolysiert werden. Dabei werden aus dem Großteil der organischen Verbindungen organische Salze gebildet, welche im flüssigen Medium in Lösung gehen. Die Anionen der organischen Salze stammen in bekannter Weise insbesondere von organischen Säuren, von Proteinen oder von Kohlenhydraten ab. Beim beschriebenen Ausführungsbeispiel stammen die Anionen beispielsweise von den Fettsäuren der Triacylglycerole ab. Die gebildeten organischen Salze enthalten daher meistens eine oder mehrere Carboxylatgruppe(n) (R-COO-). Beim beschriebenen Ausführungsbeispiel entstehen - bedingt durch den Einsatz von Kalilauge - insbesondere organische Kaliumsalze.

Aus etwaigem gebundenen Phosphor bilden sich - bedingt durch den Einsatz von Kalilauge - Kaliumphosphate, beim gewählten pH-Wert von mindestens 9,0 insbesondere Kaliumtriphosphate, welche in Lösung gehen. Es entstehen daher mitunter auch anorganische Kaliumsalze, welche sich im Medium lösen.

Etwaig gebundener Stickstoff, beispielsweise aus Proteinen stammende Aminosäuren, wird bzw. werden in bekannter Weise über nucleophile Substitutionen, insbesondere über S_{N}2-Reaktionen, zumindest Großteils in Ammoniak, organische Säuren und deren Salze zerlegt.

Aus vorhandenem gebundenen Schwefel, zum Beispiel aus schwefelhaltigen Proteinen, wie beispielsweise Cystein, wird bzw. werden bei der Hydrolyse Schwefelwasserstoff und/oder Sulfide gebildet. Gebildete Sulfide lösen sich im flüssigen Medium und bilden gemeinsam mit etwaigen im Medium vorhandenen Schwermetallen schwerlösliche Schwermetallsulfide, welche im Medium ausfallen. Sollten keine schwefelhaltigen Verbindungen mit dem Abfall mitgeliefert worden sein, wird in den Hydrolysereaktor 3 eine Sulfidlösung, insbesondere eine Kaliumsulfidlösung, auf nicht gezeigte Weise eingeleitet und derart die Fällung der Schwermetalle bewirkt.

Insbesondere wird bei der Hydrolyse auch Kohlenstoffdioxid gebildet, welches mit Kalilauge zu im Medium gut löslichen Kaliumcarbonat reagiert. Aus etwaigen Kalziumsalzen, welche insbesondere von Pflanzen und Tierknochen stammen, werden zumindest Großteils mit dem Kohlenstoffdioxid unlösliche Kalziumcarbonate gebildet.

Im Medium nicht gelöste bzw. unlösliche anorganische Bestandteile, welche gegebenenfalls zuvor mit den noch nicht gelösten organischen Verbindungen vermengt waren, sedimentieren und bilden eine feste anorganische Phase. Diese anorganischen Bestandteile sind beispielsweise Kieselsteine, Sand sowie die erwähnten Kalziumsalze und Schwermetallsulfide. Je nach Abfall kann die feste anorganische Phase auch noch weitere Bestandteile enthalten.

Der sich während der Hydrolyse bildende Brüden besteht aus Wasserdampf und gasförmigen Stickstoffverbindungen, wie beispielsweise Ammoniak oder Aminen, und wird vom Hydrolysereaktor 3 in ein Waschkolonne 4 geleitet (Stoffstrom c). Das zurückbleibende hydrolysierte flüssige Medium wird mitsamt der angefallenen festen anorganischen Phase aus dem Hydrolysereaktor 3 in eine mechanische Trennvorrichtung 5 überführt (Stoffstrom d) und in dieser, wie noch beschrieben wird, weiter aufbereitet.

Der in die Waschkolonne 4 geleitete, Stickstoffverbindungen enthaltende Brüden wird mit Phosphorsäure (H₃PO₄) versetzt, welche auf bekannte Weise von oben in die Waschkolonne 4 eingesprüht wird (Stoffstrom c'). Dadurch bildet sich im Sumpf der Waschkolonne 4 eine Ammoniumphosphate, beispielsweise (NH₄)₃PO₄, enthaltende Lösung. Ein weitgehend von Stickstoffverbindungen freier Brüden steigt in den Kopf der Waschkolonne 4 auf. Anstelle der Phosphorsäure kann auch Schwefelsäure (H₂SO₄) verwendet werden, sodass sich im Sumpf der Waschkolonne 4 Ammoniumsulfate bilden. Durch die Zugabe der Säure (Phosphorsäure bzw. Schwefelsäure) verschiebt sich das Gleichgewicht NH₃ + H₃O⁺ ⇄ NH₄⁺ + H₂O auf Seite der Ammoniumionen (NH₄⁺) bzw. der Ammoniumsalze. Die Ammoniumionen sind - im Gegensatz zu den Ammoniumphosphaten bzw. Ammoniumsulfaten - einer Elektrolyse sehr gut zugänglich.

Die im Sumpf der Waschkolonne 4 anfallende Lösung wird in zumindest eine elektrochemische Zelle 6 weitergeleitet (Stoffstrom e), in welcher die für den beschriebenen Waschvorgang in der Waschkolonne 4 eingesetzte Phosphorsäure (H₃PO₄) bzw. Schwefelsäure (H₂SO₄) gewonnen wird. Die elektrochemische Zelle 6 weist zwei durch eine Membran getrennte Halbzellen, nämlich einen Kathodenraum und einen Anodenraum, auf, wobei die Lösung aus der Waschkolonne 4 in den Anodenraum eingeleitet wird. Mittels Elektrolyse wird aus den jeweiligen Ammoniumsalzen im Kathodenraum (genauer: aus vom Anodenraum durch die Membran in den Kathodenraum wandernden Ammoniumionen) unter Zuleitung von Wasser (Stoffstrom e') Ammoniaklösung und Wasserstoff gewonnen, im Anodenraum wird Phosphorsäure bzw. Schwefelsäure unter gleichzeitiger Bildung von Sauerstoff zurückgewonnen. Durch die Zuleitung von Wasser in den Kathodenraum wird ein osmotischer Druckgradient erzeugt, welcher eine Strömung vom Kathodenraum zum Anodenraum bewirkt, wodurch die Diffusion von restlichen organischen Anionen vom Anodenraum in den Kathodenraum verhindert wird. Dadurch wird die Membran sauber gehalten. Die gewonnene Ammoniaklösung und der gewonnene Wasserstoff werden aus dem Kathodenraum abgeleitet (Stoffstrom f) und können in bekannter Weise als gewonnene Wertstoffe verwertet werden. Die zurückgewonnene Phosphor- bzw. Schwefelsäure sowie der gebildete Sauerstoff werden aus dem Anodenraum in die Waschkolonne 4 eingeleitet (Stoffstrom c').

Der in den Kopf der Waschkolonne 4 aufsteigende, weitgehend von Stickstoffverbindungen freie Brüden wird zunächst über einen Verdichter 7 geleitet, wodurch Temperatur und Druck des Brüdens erhöht werden, und anschließend in den Heizmantel 3b des Hydrolysereaktor 3 geleitet (Stoffstrom g). Durch die Druckerhöhung des Brüdens steigt die Siedetemperatur des im Brüden enthaltenen Wassers, sodass der Wasserdampf des Brüdens im Heizmantel 3b bei einer Temperatur >100°C kondensiert. Die Phasenumwandlungswärme des im flüssigen Medium enthaltenen Wassers wird derart zurückgewonnen und zum Erwärmen des im Hydrolysereaktors 3 befindlichen Mediums einer nachfolgenden Charge auf die für Hydrolyse bevorzugte bereits erwähnte Temperatur von 100°C bis 140°C eingesetzt. Das sich aus dem Brüden bildende Kondensat wird aus dem Heizmantel 3b abgeleitet (Stoffstrom h), wobei mittels eines Ventiles 8 die Aufrechterhaltung des Druckes und damit der hohen Temperatur des zuvor verdichteten Brüdens vor seiner Ableitung als Kondensat sicherstellt wird.

Das hydrolysierte flüssige Medium wird, wie bereits erwähnt, aus dem Hydrolysereaktor 3 in die Trennvorrichtung 5, welche beispielsweise ein Siebbandfilter oder eine Schälzentrifuge ist, überführt (Stoffstrom d). Mittels der Trennvorrichtung 5 wird aus dem hydrolysierten flüssigen Medium die erwähnte feste anorganische Phase abgetrennt und nachfolgend vorzugsweise mit Wasser gewaschen, wodurch insbesondere etwaige noch in dieser enthaltene organische Salze, insbesondere organische Kaliumsalze, herausgelöst werden. Die beim Waschvorgang erhaltene Waschlösung wird auf nicht gezeigte Weise in den Hydrolysereaktor 3 zurückgeführt und dort gemeinsam mit der nächsten Charge auf die bereits beschriebene Weise weiter eingedampft. Die feste anorganische Phase wird aus der Trennvorrichtung 5 mechanisch entfernt und stellt eine schwermetallhaltige anorganische Fraktion dar (Stoffstrom j), aus welcher Schwermetalle, beispielsweise Kupfer, Chrom oder Cadmium, als Wertstoffe gewonnen werden. Das gefilterte flüssige Medium enthält die gelösten organischen Salze, wie zum Beispiel organische Kaliumsalze, gelöste anorganische Phosphate, gelöstes Kaliumcarbonat und möglicherweise noch geringe Mengen an Stickstoffverbindungen und wird in einen Reaktor 9 weitergeleitet (Stoffstrom i).

Der Reaktor 9 ist vorzugsweise baugleich zum Hydrolysereaktor 3, weist daher ein Rührwerk 9a und einen Heizmantel 9b auf. Das in den Reaktor 9 geleitete gefilterte flüssige Medium wird unter einem absoluten Druck von 0,02 bar bis 0,9 bar auf 50°C bis 80°C, insbesondere auf mindestens 70°C, erwärmt. Der Druck im Reaktor 9 wird durch eine Vakuumpumpe 12 erzeugt, welche, wie noch erläutert wird, hinter einem Wärmtauscher 11 angeordnet ist.

Bei den erwähnten Bedingungen im Reaktor 9 sammeln sich etwaige im flüssigen Medium noch vorhandene Stickstoffverbindungen, beispielsweise Ammoniak und Amine, im sich im Reaktor 9 bildenden Brüden, welcher in eine Waschkolonne 10 geleitet wird (Stoffstrom k). Ferner ist durch die im Reaktor 9 herrschenden Bedingungen sichergestellt, dass die bei der vorherigen Hydrolyse gebildeten organischen Verbindungen nicht zersetzt werden und daher unverändert im flüssigen Medium verbleiben.

In der Waschkolonne 10 herrscht ein im Wesentlichen mit dem Druck im Reaktor 9 übereinstimmender Druck. Die Waschkolonne 10 wird auf analoge Weise zur bereits erwähnten Waschkolonne 4 betrieben. Die für die Gaswäsche in der Waschkolonne 10 verwendete Phosphorsäure bzw. Schwefelsäure stammt ebenfalls aus der elektrochemischen Zelle 6 (Stoffstrom k`), die im Sumpf der Waschkolonne 4 anfallende Lösung wird entsprechend zur elektrochemischen Zelle 6 geleitet (Stoffstrom e").

Wie durch den Stoffstrom 1 angedeutet, wird der von Stickstoffverbindungen zumindest weitgehend befreite Brüden aus dem Kopf der Waschkolonne 10 über einen Wärmetauscher 11 geleitet und kondensiert in diesem, wobei die Kondensationswärme aus dem Wärmetauscher 11 abgeleitet wird. Wasserdampf und etwaige Spaltgase, beispielsweise Kohlenstoffdioxid, werden über die bereits erwähnte Vakuumpumpe 12 ausgetragen.

Das nach der Erwärmung im Reaktor 9 zurückbleibende, noch warme Medium ist von flüssiger bzw. zähflüssiger Konsistenz enthält nach wie vor gelöste organische Salze, gelöste anorganische Phosphate, gelöstes Kaliumcarbonat und möglicherweise noch geringe Mengen an Stickstoffverbindungen sowie ferner noch bis zu zirka 20% Wasser.

Dieses Medium wird in einen Reaktor 13 weitergeleitet, insbesondere über ein Ventil 8' langsam in diesen zudosiert (Stoffstrom m). Der Reaktor 13 ist vorzugsweise baugleich zum Hydrolysereaktor 3, weist daher ein Rührwerk 13a und einen Heizmantel 13b auf.

Im Reaktor 13 befindet sich ein Wärmeträgeröl, beispielsweise ein Paraffin, welches die Wärmeübertragung auf das Medium verbessert. Durch intensives Rühren mit dem Rührwerk 13a wird das Medium im Wärmeträgeröl suspendiert und über den Heizmantel 13b auf eine Temperatur von 220°C bis 380°C, vorzugsweise von bis zu 300°C, besonders bevorzugter Weise von bis zu 230°C, erwärmt. Zur Erwärmung wird durch den Heizmantel 13b beispielsweise ein entsprechend zuvor erhitztes Thermalöl geleitet. Alternativ können beispielsweise heiße Abgase aus einem Blockheizkraftwerk eingeleitet werden. Der absolute Druck im Reaktor 13 beträgt 0,02 bar bis 0,9 bar und wird mittels einer Vakuumpumpe 16 erzeugt, deren genaue Position noch aus der nachfolgenden Beschreibung folgt.

Der sich im Reaktor 13 aus dem Medium bildende Brüden umfasst flüchtige organische Verbindungen, insbesondere Alkane, Ketone, Ester, Alkohole und Ether sowie Wasser und wird in eine Destillationskolonne 14, welche bei evakuiertem Reaktor 13 ebenfalls evakuiert ist, weitergeleitet (Stoffstrom n). In der Destillationskolonne 14 werden durch Einsprühen von Wasser die im eingeleiteten Brüden enthaltenen organischen Verbindungen kondensiert. Die Destillationskolonne 14 wird derart betrieben, dass die organischen Verbindungen, welche einen geringeren Dampfdruck als Wasser aufweisen, im Sumpf der Destillationskolonne 14 anfallen, und ein hauptsächlich Wasserdampf enthaltender Brüden in den Kopf der Destillationskolonne 14 aufsteigt. Die im Sumpf der Destillationskolonne 14 angesammelten hochsiedenden organischen Verbindungen werden abgeleitet (Stoffstrom o) und stellen einen weiteren Wertstoff dar, welcher insbesondere direkt zur Energiegewinnung oder zur Gewinnung weiterer Wertstoffe genutzt wird. Der hauptsächlich Wasserdampf enthaltende Brüden wird über den Kopf der Destillationskolonne 14 aus dieser ausgetragen (Stoffstrom p) und anschließend in einem Wärmetauscher 15 kondensiert. Etwaige in der Destillationskolonne 14 gebildete Spaltgase, beispielsweise Kohlenstoffdioxid, werden gemeinsam mit dem Brüden aus dem Kopf der Destillationskolonne 14 in den Wärmtauscher 15 geleitet und aus diesem mittels der Vakuumpumpe 16 ausgetragen. Die Spaltgase können insbesondere thermisch oder stofflich verwertet werden, beispielsweise in Wärmekraftmaschinen mit innerer Verbrennung, wie beispielsweise Gasmotoren, Dieselmotoren oder Gasturbinen.

Im Reaktor 13 verbleibt eine Suspension aus dem Wärmeträgeröl und aus einer festen Phase, welche von anorganischen und organischen Salze (beim Ausführungsbeispiel insbesondere Kaliumsalzen). Wurden entsprechend phosphorhaltige Abfällen eingesetzt umfasst die feste Phase ferner Phosphate (beim Ausführungsbeispiel insbesondere Kaliumphosphate).

Die organischen und anorganischen Salze sind polare Verbindungen, welche der Destillation zunächst nicht zugänglich sind. Durch die hohen Temperaturen im Reaktor 13 zerfällt üblicherweise zumindest ein Teil der vorhandenen Salze in ebenfalls destillierbare organische Verbindungen, welche in die Destillationskolonne 14 weitergeleitet werden (Stoffstrom n). Um aus den in der Suspension zurückbleibenden organischen und anorganischen Salzen weitere, ebenfalls destillierbare organische Verbindungen zu gewinnen, wird wie im Nachfolgenden beschrieben vorgegangen.

Die Suspension aus Wärmeträgeröl und den festen organischen und anorganischen Salzen wird aus dem Reaktor 13 in einen Abscheider 17 überführt (Stoffstrom q). Ferner wird in den Abscheider 17 ein aus einer Konvertierungsvorrichtung 18 stammender wasserhaltiger Rücklauf (Stoffstrom q') zugeleitet. In diesem Rücklauf werden im Abscheider 17 die im Wärmeträgeröl suspendierten organischen und anorganischen Salze eluiert, d.h. die Salze werden aus dem Wärmeträgeröl "herausgelöst". Im Abscheider 17 bildet sich - bedingt durch die unterschiedlichen Dichten - eine aufschwimmende Phase 20, welche vom Wärmeträgeröl gebildet ist, und eine die organischen Salze enthaltende wässrige Phase 21. Das aufschwimmende Wärmeträgeröl wird aus dem Abscheider 17 kontinuierlich in den Reaktor 13 zurückgleitet (Stoffstrom m'), in welchem es wieder die Wärmeübertragung auf das Medium verbessert. Zusätzlich dient das Wärmeträgeröl im Abscheider 17 auch als Extraktionsmittel für organische Verbindungen, welche im Rücklauf (Stoffstrom q') enthalten sind und derart in den Reaktor 13 geleitet werden. Diese organischen Verbindungen werden aus den in der wässrigen Phase gelösten organischen Salzen, wie im Nachfolgenden erläutert, gewonnen.

Zur Gewinnung destillierbarer organischer Verbindungen aus den organischen Salzen wird die wässrige Phase 21, welche eine Elektrolytlösung darstellt, aus dem Abscheider 17 in eine Konvertierungsvorrichtung 18 geleitet (Stoffstrom r). Die Konvertierungsvorrichtung 18 ist beispielsweise gemäß der noch nicht veröffentlichten österreichischen Patentanmeldung A50387/2016 aufgebaut und arbeitet nach dem dort beschriebenen Verfahren zur elektrochemischen Konvertierung. Die wässrige Phase wird insbesondere in zumindest einer einkammrigen, als Durchflusszelle konzipierten Elektrolysezelle, welche ein Elektrodenpaket aus zumindest zwei an eine Spannungsquelle angeschlossenen Kontaktelektroden aufweist, kontinuierlich ein- und ausgeleitet, wobei sie das Elektrodenpaket durchströmt. Die Prozessparameter (Verweilzeit der Elektrolytlösung in der Elektrolysezelle, die Temperatur der wässrigen Phase, der pH-Wert der Elektrolytlösung, die Ionenkonzentration der Elektrolytlösung, die Stromstärke und die Spannung der Spannungsquelle) werden derart eingestellt, dass die organischen Salze in der Elektrolytlösung abgebaut werden, wobei aus den anorganischen und organischen Salzen an der Anode organische Verbindungen verschiedener Stoffklassen, unter anderem auch Alkane, gebildet werden. Ferner wird an der Anode Kohlenstoffdioxid und Sauerstoff und an der Kathode hauptsächlich Wasserstoff gebildet. Der Wasserstoff wirkt hydrierend, sodass auch im Bereich der Kathode organische Verbindungen verschiedener Stoffklassen gebildet werden. Eine mögliche Reaktion in der Konvertierungsvorrichtung 18 ist eine Kolbe-Elektrolyse, bei welcher die organischen Salze beispielsweise zu Alkanen, zu weiteren organischen Verbindungen sowie zu Kohlenstoffdioxid umgewandelt werden. Gebildetes Kohlenstoffdioxid reagiert mit der nach wie vor vorhandenen Kalilauge zu Kaliumcarbonat. Ferner können die organischen Verbindungen auch partiell oxidiert werden. Wie in Fig. 1 angedeutet, erfolgt die Konvertierung in der Konvertierungsvorrichtung 18 vorzugsweise unter Zuleitung von Wasser. Dadurch wird die Leitfähigkeit der Elektrolytlösung verbessert, da eine mögliche Überschreitung der Grenzleitfähigkeit einer gesättigten Salzlösung vermieden wird. Zusätzlich ist dadurch der aus der Konvertierungsvorrichtung 18 in den Abscheider 17 zurückgeleitete Rücklauf (Stoffstrom q') entsprechend wasserhaltig, wodurch die bereits beschriebene Eluation der organischen Salze im Abscheider 17 und die in diesem stattfindende Phasentrennung ermöglicht sind.

Das in der Konvertierungsvorrichtung 18 erhaltene flüssige Gemisch wird in den Abscheider 17 zurückgeleitet (Stoffstrom q') und kommt dort mit dem Wärmeträgeröl in Kontakt. Die im Zuge der Konvertierung gebildeten organischen Verbindungen sind lipophil, sodass sich diese nun auch in dem zusätzlich als Extraktionsmittel fungierenden Wärmeträgeröl gut lösen. Die wässrige Phase des flüssigen Gemisches sammelt sich im unteren Bereich des Abscheiders 17. Durch das erwähnte Rückführen des Wärmeträgeröls in den Rektor 13 werden daher die in der Konvertierungsvorrichtung 18 gebildeten destillierbaren organischen Verbindungen in den Reaktor 13 zurückgeleitet (Stoffstrom m`). Über die Konvertierungsvorrichtung 18 gelingt es somit, im Sumpf des Reaktors 13 anfallende, in einer wässrigen Phase gelöste, organische Salze in destillierbare organische Verbindungen (Kohlenwasserstoffe) zu überführen, aus welchen auf die bereits beschriebene Weise weitere Wertstoffe gewonnen werden (Stoffströme n, o und p). Die im Reaktor 13 jeweils anfallende wässrige Phase kann mehrmals auf die beschriebene Weise aufbereitet werden, sodass die organischen und anorganischen Salze im Wesentlichen vollständig aus der wässrigen Phase entfernt und aus diesen Wertstoffe gewonnen werden.

Ist kein weiterer Konvertierungsschritt der wässrigen Phase über die Konvertierungsvorrichtung 18 vorgesehen, wird die nahezu vollständig von organischen Salzen befreite wässrige Phase aus dem Abscheider 17 in eine elektrochemische Zelle 19 geleitet (Stoffstrom s). Die wässrige Phase enthält noch anorganische Salze, beim Ausführungsbeispiel insbesondere Kaliumsalze, Kaliumcarbonat, Kaliumhydroxid und Kaliumphosphat und stellt eine Elektrolytlösung dar. Kaliumcarbonat wurde, wie bereits erläutert, bei der Hydrolyse im Hydrolysereaktor 3 und in der Konvertierungsvorrichtung 18 gebildet. Kaliumhydroxid stammt von der zugegebenen Kalilauge. Kaliumphosphat stammt aus etwaigem im Abfall enthaltenen Phosphor, welcher mit der Kalilauge im Hydrolysereaktor 3 umgesetzt wurde, wie ebenfalls bereits erwähnt.

Die elektrochemische Zelle 19 ist vorzugsweise mit einer für Kalium-Ionen durchlässigen Membran in zwei Halbzellen - einen Anodenraum und einen Kathodenraum - geteilt. Durch Anlegen von Gleichstrom/Gleichspannung wandern die Kalium-Ionen durch die Membran in den Kathodenraum und bilden gemeinsam mit zugeleitetem Wasser an der Kathode Wasserstoff und Kaliumhydroxid, wodurch Kalilauge gebildet wird. Im Anodenraum bilden sich an der Anode Phosphorsäure, Sauerstoff und Kohlenstoffdioxid. Die Kalilauge wird aus dem Kathodenraum, die Phosphorsäure wird aus dem Anodenraum abgeleitet, die gebildeten Gase Sauerstoff und Wasserstoff werden ebenfalls abgeleitet. Durch Zuleitung von Wasser in den Kathodenraum werden der Diffusionsverlust von Phosphat durch die Membran gering gehalten und eine Verstopfung der Membran effektiv vermieden. Ferner bewirkt die Zuleitung einen osmotischen Gradienten in Richtung Anodenraum.

Die gewonnene Kalilauge wird vorzugsweise auf die bereits beschriebene Weise im Mischer 2 verwendet (Stoffstrom a'). Etwaiger Überschuss an Kalilauge wird insbesondere kommerziell verwertet. Die Phosphorsäure kann beispielsweise zu den Waschkolonnen 4 und 10 geleitet und für die beschriebenen Waschvorgänge eingesetzt werden (Stoffströme c` und k`). Die gewonnene Kalilauge und die gewonnene Phosphorsäure sind weitere Wertstoffe. Der in der elektrochemischen Zelle 19 gewonnene Wasserstoff stellt bekannter Weise ebenfalls einen Wertstoff dar und eignet sich beispielsweise bestens zur Energiegewinnung in einem Verbrennungsmotor oder in einer Brennstoffzelle.

Beim beschriebenen Ausführungsbeispiel werden in Abhängigkeit des jeweiligen Abfalls insbesondere Stoffe bzw. Wertstoffe aus der folgenden Gruppe erhalten:
- Wasser,
- Ammoniak (als Ammoniaklösung),
- Phosphorsäure bzw. Schwefelsäure (jeweils als wässrige Lösung),
- Kalium (als Kalilauge),
- Anorganische Bestandteile, zu welchen insbesondere Metalle gehören (außer jenen, welche zur 1. Hauptgruppe des Periodensystems gehören), wobei die Metalle insbesondere als Salze, Oxide oder Hydroxide erhalten werden,
- Wasserstoff,
- Sauerstoff,
- Weitere Gase (Stickstoff, Wasserdampf, Kohlenstoffdioxid, Spurengase).

Die Erfindung ist auf das beschriebene Ausführungsbeispiel nicht beschränkt. Anstelle von Kaliumhydroxyidlösung (Stoffstrom a') kann eine wässrige Kaliumcarbonatlösung, eine wässrige Natriumhydroxidlösung oder eine wässrige Natriumcarbonatlösung verwendet werden. Ferner können auch Mischungen solcher Lösungen verwendet werden. Natriumhydroxidlösung und Natriumcarbonatlösung sind insbesondere zur Hydrolyse bereits natriumhaltiger Abfälle von Vorteil, beispielsweise bei Abfällen mariner Herkunft, wie insbesondere Algen enthaltender Abfall. In der elektrochemischen Zelle 19 können analog zur bereits beschriebenen Weise eine Kaliumhydroxidlösung (Kalilauge) und/oder eine Natriumhydroxidlsöung (Natronlauge) gewonnen werden. Etwaig in der elektrochemischen Zelle 19 entstehendes Kohlenstoffdioxid wird abgeleitet.

Gemäß einer alternativen Ausführungsvariante ist vorgesehen, aus dem nach der Erwärmung im Reaktor 9 zurückbleibenden flüssigen bzw. zähflüssigen Medium (Stoffstrom m) mittels thermischer Verfahren Wertstoffe zu gewinnen. Wie bereits erwähnt, enthält das Medium gelöste organische Salze, gelöste anorganische Phosphate und bis zu zirka 20% Wasser.

Eine erste Möglichkeit besteht in einer Pyrolyse des aus dem Reaktor 9 stammenden Mediums. Durch die vorgelagerte Hydrolyse des Mediums im Hydrolysereaktor 3 wurde das Molekulargewicht der im Abfall enthaltenen organischen Moleküle deutlich verringert. Dadurch ist es möglich, die Pyrolyse bei einer für eine Pyrolyse geringen Temperatur durchzuführen, wobei das Medium vorzugsweise bei einer Temperatur von höchstens 500°C pyrolysiert wird. Beispielsweise könnte als organisches Salz im Zuge der Hydrolyse Kaliumacetat gebildet worden sein. Dieses zerfällt bei der Pyrolyse bereits bei etwa 300°C in Aceton und Kaliumcarbonat.

Da das Medium ferner mittels der Trennvorrichtung 5 gefiltert wurde, ist das Medium frei von etwaigen schwermetallhaltigen anorganischen Verbindungen. Im Gegensatz zu herkömmlichen Pyrolysen, bei welchen die Schwermetalle im Pyrolysekoks anfallen, ist der entstehende Pyrolysekoks bei der Pyrolyse eines aus dem Reaktor 9 stammenden Mediums in dieser Hinsicht unproblematisch. Da das Medium, mit Ausnahme von Alkaliverbindungen, frei von sämtlichen anorganischen Komponenten ist, läuft die Pyrolyse ohne oder zumindest weitgehend ohne Nebenreaktionen ab. Dadurch werden bei der Pyrolyse des aus dem Reaktor 9 stammenden Mediums im Vergleich zu herkömmlichen Pyrolysen deutlich höhere Ausbeuten an flüssigen Produkten erzielt.

Gemäß einer zweiten Möglichkeit wird das aus dem Reaktor 9 stammende Medium verbrannt.

Gemäß einer dritten Möglichkeit wird das aus dem Reaktor 9 stammende Medium vergast. Die Vergasung erfolgt insbesondere mittels einer Flugstromvergasung, einer Wirbelschichtvergasung oder einer Festbettvergasung. Besonders geeignet ist die Festbettvergasung in einem Gegenstrom-Festbettvergaser, in welchem das Medium auf besonderes schonende Weise erhitzt wird, wodurch hohe Ausbeuten von flüssigen organischen Verbindungen erzielt werden.

In den elektrochemischen Zellen 6 und 19 können die erwähnten Wertstoffe (Phosphorsäure, Ammoniaklösung, Kaliumhydroxidlösung und Natriumhydroxidlösung) auch mittels kapazitiver Deionisation gewonnen werden.

### Bezugsziffernliste

- 1: Abfall
- 2: Mischer
- 3: Hydrolysereaktor
- 3a: Rührwerk
- 3b: Heizmantel
- 4: Waschkolonne
- 5: Trennvorrichtung
- 6: elektrochemische Zelle
- 7: Verdichter
- 8: Ventil
- 9: Reaktor
- 9a: Rührwerk
- 9b: Heizmantel
- 10: Waschkolonne
- 11: Wärmetauscher
- 12: Vakuumpumpe
- 13: Reaktor
- 13a: Rührwerk
- 13b: Heizmantel
- 14: Destillationskolonne
- 15: Wärmetauscher
- 16: Vakuumpumpe
- 17: Abscheider
- 18: Konvertierungsvorrichtung
- 19: elektrochemische Zelle
- 20: aufschwimmende Phase
- 21: wässrige Phase

## Patentansprüche

1. Verfahren zur Gewinnung von Wertstoffen aus in Abfall (1) enthaltenen organischen Verbindungen oder in diesem enthaltenen chemischen Elementen mit folgenden nacheinander ablaufenden Schritten:
a) Vermischen des Abfalls (1) mit einer Base, sodass ein flüssiges Medium gebildet wird,
b) Erwärmen des Mediums in einem Reaktor (3) auf eine Temperatur von 100°C bis 140°C zum Hydrolysieren der im Medium enthaltenen organischen Verbindungen und Abzug (c) des sich bildenden Brüdens,
b1) Weiterleiten (c) des Brüdens vom Reaktor (3) in eine Waschkolonne (4),
b2) Versetzen des Brüdens mit Schwefelsäure oder Phosphorsäure (c') zur Bildung von Ammoniumsulfat(en) bzw. Ammoniumphosphat(en), wobei im Sumpf der Waschkolonne (4) eine Lösung erhalten wird und der Brüden aus dem Kopf der Waschkolonne (4) abgeleitet wird (g),
b3) Weiterleiten (e) der in Schritt b2) erhaltenen Lösung in eine elektrochemische Zelle (6) mit einem Kathodenraum und einem Anodenraum und Elektrolysieren der Lösung, wobei im Anodenraum Schwefelsäure bzw. Phosphorsäure für Schritt b2) gewonnen wird,
b4) Rückleiten (c') der gewonnenen Schwefelsäure bzw. Phosphorsäure aus dem Anodenraum in die Waschkolonne (4) und Ableiten (f) von im Kathodenraum gebildeten Wertstoffen, insbesondere einer Ammoniaklösung,
c) Weiterleiten (d) des in Schritt b) im Reaktor (3) zurückbleibenden flüssigen Mediums in eine Trennvorrichtung (5) zur Abtrennung einer etwaig im flüssigen Medium enthaltenen festen anorganischen Phase.

2. Verfahren nach Anspruch 1, **dadurch gekennzeichnet, dass** Schritt a) bereits im Reaktor (3) oder in einem separaten Mischer (2) durchgeführt wird, wobei vorzugsweise in Schritt a) der Abfall und die Base auf 60°C bis 70°C erwärmt werden.

3. Verfahren nach Anspruch 1 oder 2, **dadurch gekennzeichnet, dass** in Schritt a) der Abfall mit einer wässrigen Kaliumhydroxidlösung (a'), einer wässrigen Natriumhydroxidlösung, einer wässrigen Kaliumcarbonatlösung, einer wässrigen Natriumcarbonatlösung oder mit einer Mischung von zumindest zwei dieser Lösungen vermischt wird.

4. Verfahren nach einem der Ansprüche 1 bis 3, **dadurch gekennzeichnet, dass** in Schritt a) die Menge und/oder die Konzentration der Base derart gewählt werden bzw. wird, dass das gebildete flüssige Medium einen pH-Wert von 9,0 bis 14,0, insbesondere von mindestens 12,0, aufweist, wobei vorzugsweise das Mengenverhältnis von im Abfall enthaltener Trockensubstanz zur Base 1:1 bis 1:2 beträgt.

5. Verfahren nach einem der Ansprüche 1 bis 4, **dadurch gekennzeichnet, dass** in Schritt b) das flüssige Medium unter Rühren auf seine Siedetemperatur erwärmt wird.

6. Verfahren nach einem der Ansprüche 1 bis 5, **dadurch gekennzeichnet, dass** in Schritt b) eine Sulfidlösung, insbesondere eine Kaliumsulfid- oder eine Natriumsulfidlösung, zugesetzt wird.

7. Verfahren nach einem der Ansprüche 1 bis 6, **dadurch gekennzeichnet, dass** in Schritt b3) Wasser in den Kathodenraum eingeleitet wird (e').

8. Verfahren nach einem der Ansprüche 1 bis 7, **dadurch gekennzeichnet, dass** der in Schritt b2) abgeleitete Brüden verdichtet und anschließend in Schritt b) zum Erwärmen des Mediums im Reaktor (3) eingesetzt wird.

9. Verfahren nach einem der Ansprüche 1 bis 8, **dadurch gekennzeichnet, dass** die in Schritt c) abgetrennte feste anorganische Phase gemäß folgender nacheinander ablaufender Schritte verwertet wird:
c1) Waschen der festen anorganischen Phase mit Wasser,
c2) Rückleiten der in Schritt c1) erhaltenen Waschlösung in den in Schritt b) verwendeten Reaktor (3),
c3) Austragen (j) der in Schritt c1) zurückbleibenden anorganischen Phase.

10. Verfahren nach einem der Ansprüche 1 bis 9, **dadurch gekennzeichnet, dass** nach Schritt b) und vor Schritt c) oder nach Schritt c) folgende Schritte nacheinander durchgeführt werden:
d) Weiterleiten des in Schritt b) bzw. des in Schritt c) erhaltenen flüssigen Mediums in einen zweiten Reaktor (9),
*e)* Erwärmen des Mediums im zweiten Reaktor (9) auf eine Temperatur von 50°C bis 80°C unter einem absoluten Druck von 0,02 bar bis 0,9 bar und Abzug (k) des sich bildenden Brüdens.

11. Verfahren nach Anspruch 10, **dadurch gekennzeichnet, dass** der in Schritt e) gebildete Brüden gemäß folgender nacheinander ablaufender Schritte verwertet wird:
e1) Weiterleiten (k) des Brüdens vom zweiten Reaktor (9) in eine zweite Waschkolonne (10),
e2) Versetzen (k') des Brüdens mit Schwefelsäure oder Phosphorsäure zur Bildung von Ammoniumsulfat(en) bzw. Ammoniumphosphat(en), wobei im Sumpf der Waschkolonne (10) eine Lösung erhalten wird,
e3) Weiterleiten (e") der in e2) erhaltenen Lösung in eine elektrochemische Zelle (6) mit einem Kathodenraum und einem Anodenraum und Elektrolysieren der Lösung, wobei im Anodenraum Schwefelsäure bzw. Phosphorsäure für Schritt e2) gewonnen wird,
e4) Rückleiten (k') der gewonnenen Schwefelsäure bzw. Phosphorsäure aus dem Anodenraum in die Waschkolonne (4) und Ableiten (f) der im Kathodenraum gebildeten Wertstoffe, insbesondere einer Ammoniaklösung.

12. Verfahren nach Anspruch 10 oder 11, **dadurch gekennzeichnet, dass** das nach dem letzten der Schritte a) bis e) - je nach Reihenfolge das nach Schritt c) oder das nach Schritt e) - erhaltene flüssige Medium gemäß folgender nacheinander ablaufender Schritte verwertet wird:
f) Weiterleiten (m), insbesondere kontinuierliches Weiterleiten, des flüssigen Mediums in einen dritten Reaktor (13),
g) Vermischen des Mediums mit einem Wärmeträgeröl und Erwärmen des Mediums auf 220°C bis 380°C, insbesondere auf höchstens 300°C, vorzugsweise auf höchstens 230°C, unter einem absoluten Druck von 0,02 bar bis 0,9 bar,
h) Ableiten (n) des in Schritt g) gebildeten Brüdens und Verwerten des Brüdens,
i) Ableiten (q) der in Schritt h) verbleibenden Suspension aus Wärmeträgeröl und einer festen organischen Phase und Verwerten der Suspension.

13. Verfahren nach Anspruch 12, **dadurch gekennzeichnet, dass** der gemäß Schritt h) abgeleitete Brüden gemäß folgender nacheinander ablaufender Schritte verwertet wird:
h1) Ableiten (n) des gebildeten Brüdens in eine Destillationskolonne (14),
h2) Abkühlen des Brüdens, insbesondere durch Einsprühen von Wasser, in der Destillationskolonne (14) zur Kondensation organsicher Verbindungen,
h3) Ableiten (o) der in Schritt h2) kondensierten organischen Verbindungen und Ableiten des in Schritt h2) zurückbleibenden Brüdens (p).

14. Verfahren nach Anspruch 12, **dadurch gekennzeichnet, dass** die gemäß Schritt i) abgeleitete Suspension aus Wärmeträgeröl und fester organischer Phase gemäß folgender nacheinander ablaufender Schritte verwertet wird:
i1) Ableiten (q) der Suspension in einen Abscheider (17) und Zuführen (q') einer wasserhaltigen Phase, wobei sich im Abscheider (17) eine wässrige Phase (21) und eine auf dieser aufschwimmende Phase (20) bilden,
i2) Rückleiten (m') der aufschwimmenden Phase (20) aus dem Abscheider (17) in den dritten Reaktor (13) und Weiterleiten der wässrigen Phase (21) in eine Konvertierungsvorrichtung (18),
i3) Konvertieren von in der wässrigen Phase (21) gelösten polaren organischen Salzen in der Konvertierungsvorrichtung (18) zu organischen Verbindungen, insbesondere Kohlenwasserstoffen und Kohlenstoffdioxid, sowie zu Wasserstoff,
i4) Rückleiten (q') des in Schritt i3) erhaltenen flüssigen Mediums in den Abscheider (17), welches insbesondere die unter Schritt i) erwähnte wasserhaltige Phase ist.

15. Verfahren nach Anspruch 14, **dadurch gekennzeichnet, dass** die in Schritt i1) gebildete wässrige Phase (21), vorzugsweise nach zumindest einmaligem Durchführen der Schritte i3) und i4), in eine elektrochemische Zelle (19) mit zwei durch eine Alkalimetall-Ionen durchlässige Membran voneinander getrennten Halbzellen gleitet (s) und in dieser elektrolysiert wird.

16. Verfahren nach einem der Ansprüche 1 bis 11, **dadurch gekennzeichnet, dass** das in Schritt b), vorzugsweise das in Schritt c), erhaltene flüssige Medium bei einer Temperatur von höchstens 500°C pyrolysiert wird oder
vergast wird, insbesondere mittels einer Flugstromvergasung, einer Wirbelschichtvergasung oder einer Festbettvergasung, vorzugsweise einer Gegenstrom-Festbettvergasung, oder verbrannt wird.

## Claims

1. Method for extracting valuable materials from organic compounds contained in waste (1) or chemical elements contained therein, comprising the following consecutive steps:
a) mixing the waste (1) with a base, so that a liquid medium is formed,
b) heating the medium in a reactor (3) to a temperature of 100°C to 140°C for the hydrolysis of organic compounds contained in the medium, and removing (c) the vapour which is formed,
b1) transferring (c) the vapour from the reactor (3) to a washing column (4),
b2) adding sulfuric acid or phosphoric acid (c') to the vapour to form ammonium sulphate(s) or ammonium phosphate(s), wherein a solution is obtained in the bottom of the washing column (4) and the vapour is withdrawn (g) from the head of the washing column (4),
b3) transferring (e) the solution obtained in step b2) to an electrochemical cell (6) with a cathode chamber and an anode chamber and electrolyzing the solution, whereupon in the anode chamber sulphuric acid or phosphoric acid is obtained for step b2),
b4) returning (c') the sulphuric acid or phosphoric acid obtained from the anode chamber to the washing column (4) and withdrawing (f) valuable substances formed in the cathode chamber, in particular an ammonia solution,
c) transferring (d) the liquid medium remaining in the reactor (3) in step b) to a separation device (5) for separating any solid inorganic phase contained in the liquid medium.

2. Method according to Claim 1, **characterized in that** step a) is carried out first in the reactor (3) or in a separate mixer (2), wherein preferably in step a) the waste and the base are heated to 60°C to 70°C.

3. Method according to Claim 1 or 2, **characterized in that** in step a), the waste is mixed with an aqueous potassium hydroxide solution (a'), an aqueous sodium hydroxide solution, an aqueous potassium carbonate solution, an aqueous sodium carbonate solution or with a mixture of at least two of these solutions.

4. Method according to one of Claims 1 to 3, **characterized in that** in step a) the quantity and/or concentration of the base are chosen in such a manner that the liquid medium formed has a pH value of 9.0 to 14.0, in particular of at least 12.0, wherein the quantity ratio of dry matter contained in the waste to the base is preferably 1:1 to 1:2.

5. Method according to one of Claims 1 to 4, **characterized in that** in step b), the liquid medium is heated to its boiling temperature with stirring.

6. Method according to one of Claims 1 to 5, **characterized in that** in step b), a sulphide solution, in particular a potassium sulphide or a sodium sulphide solution, is added.

7. Method according to one of Claims 1 to 6, **characterized in that** in step b3), water is introduced into the cathode chamber (e').

8. Method according to one of Claims 1 to 7, **characterized in that** the vapour withdrawn in step b2) is compressed and then used in step b) to heat the medium in the reactor (3).

9. Method according to one of Claims 1 to 8, **characterized in that** the solid inorganic phase separated in step c) is utilized in accordance with the following consecutive steps:
c1) washing the solid inorganic phase with water,
c2) returning the washing solution obtained in step c1) to the reactor (3) used in step b),
c3) discharging (j) the inorganic phase remaining in step c1).

10. Method according to one of Claims 1 to 9, **characterized in that** after step b) and before step c), or after step c), the following steps are carried out consecutively:
*d)* transferring the liquid medium obtained in step b) or in step c) to a second reactor (9),
*e)* heating the medium in the second reactor (9) to a temperature of 50°C to 80°C under an absolute pressure of 0.02 bar to 0.9 bar and withdrawing (k) the resulting vapour.

11. Method according to Claim 10, **characterized in that** the vapour formed in step e) is utilized in accordance with the following consecutive steps:
e1) transferring (k) the vapour from the second reactor (9) to a second washing column (10),
e2) adding (k') sulphuric acid or phosphoric acid to the vapour to form ammonium sulphate(s) or ammonium phosphate(s), whereupon a solution is obtained in the bottom of the washing column (10),
e3) transferring (e") the solution obtained in e2) to an electrochemical cell (6) with a cathode chamber and an anode chamber and electrolyzing the solution, whereupon sulphuric acid or phosphoric acid for step e2) is obtained in the anode chamber,
e4) returning (k') the sulphuric acid or phosphoric acid recovered from the anode chamber to the washing column (4) and withdrawing (f) the valuable substances formed in the cathode chamber, in particular an ammonia solution.

12. Method according to Claim 10 or 11, **characterized in that** the liquid medium obtained after the last of steps a) to e) - depending on the order, either the one obtained after step c) or the one obtained after step e) - is utilized in accordance with the following consecutive steps:
f) transferring (m), in particular continuously transferring, the liquid medium into a third reactor (13),
g) mixing the medium with a heat transfer oil and heating the medium to 220°C to 380°C, in particular to a maximum of 300°C, preferably to a maximum of 230°C, under an absolute pressure of 0.02 bar to 0.9 bar,
h) withdrawing (n) the vapour formed in step g) and utilizing the vapour,
i) withdrawing (q) the suspension of heat transfer oil and a solid organic phase remaining in step h) and utilizing the suspension.

13. Method according to Claim 12, **characterized in that** the vapour withdrawn in accordance with step h) is utilized in accordance with the following consecutive steps:
h1) withdrawing (n) the vapour formed to a distillation column (14),
h2) cooling the vapour in the distillation column (14), in particular by spraying water, for the condensation of organic compounds,
h3) withdrawing (o) the organic compounds condensed in step h2) and withdrawing the vapour (p) remaining in step h2).

14. Method according to Claim 12, **characterized in that** the suspension of heat transfer oil and solid organic phase obtained in accordance with step i) is utilized in accordance with the following consecutive steps:
i1) withdrawing (q) the suspension into a separator (17) and adding (q') a water-containing phase, whereupon an aqueous phase (21) and a supernatant phase (20) are formed in the separator (17),
i2) returning (m') the supernatant phase (20) from the separator (17) to the third reactor (13) and transferring the aqueous phase (21) to a conversion device (18),
i3) converting polar organic salts dissolved in the aqueous phase (21) in the conversion device (18) into organic compounds, in particular hydrocarbons and carbon dioxide, as well as hydrogen,
i4) returning (q') the liquid medium obtained in step i3) to the separator (17) which is, in particular, the water-containing phase mentioned in step i).

15. Method according to Claim 14, **characterized in that** the aqueous phase (21) formed in step i1), preferably after passing through steps i3) and i4) at least once, is passed (s) into an electrochemical cell (19) with two half-cells separated by an ionpermeable alkali metal membrane and is electrolyzed therein.

16. Method according to one of Claims 1 to 11, **characterized in that** the liquid medium obtained in step b), preferably in step c), is pyrolyzed or gasified at a temperature of at most 500°C, in particular by means of fluidized bed gasification, circulating fluidized bed gasification or fixed bed gasification, preferably counter-current fixed bed gasification, or is incinerated.

## Revendications

1. Procédé pour produire des substances valorisables à partir de composés organiques contenus dans des ordures (1) ou d'éléments chimiques contenus dans ces dernières, comprenant les étapes successives suivantes consistant à :
a) mélanger les ordures (1) avec une base de manière à former un milieu liquide,
b) chauffer le milieu dans un réacteur (3) à une température allant de 100 °C à 140 °C pour hydrolyser les composés organiques contenus dans le milieu et évacuer (c) la vapeur qui se forme, b1) transférer (c) la vapeur du réacteur (3) vers une colonne de lavage (4),
b2) mélanger la vapeur avec de l'acide sulfurique ou de l'acide phosphorique (c') pour former un ou plusieurs sulfates d'ammonium ou phosphates d'ammonium, une solution étant obtenue au pied de la colonne de lavage (4) et la vapeur étant dérivée (g) à partir de la tête de la colonne de lavage (4),
b3) transférer (e) la solution obtenue à l'étape b2) dans une cellule électrochimique (6) comportant un compartiment cathodique et un compartiment anodique et électrolyser la solution, de l'acide sulfurique ou de l'acide phosphorique étant produit en vue de l'étape b2) dans le compartiment anodique,
b4) recirculer (c') l'acide sulfurique ou l'acide phosphorique produit à partir du compartiment anodique vers la colonne de lavage (4) et dériver (f) des substances valorisables formées dans le compartiment cathodique, en particulier une solution d'ammoniac,
c) transférer (d) le milieu liquide resté dans le réacteur (3) à l'étape b) dans un dispositif de séparation (5) pour séparer une phase inorganique solide contenue éventuellement dans le milieu liquide.

2. Procédé selon la revendication 1, **caractérisé en ce que** l'étape a) est déjà réalisée dans le réacteur (3) ou dans un mélangeur séparé (2), de préférence à l'étape a), les ordures et la base sont chauffées à une température comprise entre 60 °C et 70 °C.

3. Procédé selon la revendication 1 ou 2, **caractérisé en ce que**, à l'étape a), les ordures sont mélangées avec une solution aqueuse d'hydroxyde de potassium (a'), une solution aqueuse d'hydroxyde de sodium, une solution aqueuse de carbonate de potassium, une solution aqueuse de carbonate de sodium ou avec un mélange d'au moins deux de ces solutions.

4. Procédé selon l'une des revendications 1 à 3, **caractérisé en ce que**, à l'étape a), la quantité et/ou la concentration de la base sont choisies de telle sorte que le milieu liquide formé comporte un pH de 9,0 à 14,0, en particulier d'au moins 12,0, le rapport quantitatif entre la matière sèche contenue dans les ordures et la base étant de préférence de 1: 1 à 1:2.

5. Procédé selon l'une des revendications 1 à 4, **caractérisé en ce que**, à l'étape b), le milieu liquide est chauffé à sa température d'ébullition en remuant.

6. Procédé selon l'une des revendications 1 à 5, **caractérisé en ce qu'**à l'étape b), une solution de sulfure, notamment une solution de sulfure de potassium ou une solution de sulfure de sodium est ajoutée.

7. Procédé selon l'une des revendications 1 à 6, **caractérisé en ce que**, à l'étape b3), de l'eau est introduite dans le compartiment cathodique (e').

8. Procédé selon l'une des revendications 1 à 7, **caractérisé en ce que** la vapeur dérivée à l'étape b2) est comprimée puis utilisée à l'étape b) pour chauffer le milieu dans le réacteur (3).

9. Procédé selon l'une des revendications 1 à 8, **caractérisé en ce que** la phase inorganique solide séparée à l'étape c) est valorisée selon les étapes successives suivantes consistant à :
c1) laver la phase solide inorganique avec de l'eau,
c2) recirculer la solution de lavage obtenue à l'étape c1) dans le réacteur (3) utilisé à l'étape b),
c3) décharger (j) la phase inorganique restant à l'étape c1).

10. Procédé selon l'une des revendications 1 à 9, **caractérisé en ce que** les étapes suivantes sont réalisées successivement après l'étape b) et avant l'étape c) ou après l'étape c) :
*d)* transférer le milieu liquide obtenu à l'étape b) ou à l'étape c) dans un deuxième réacteur (9),
*e)* chauffer le milieu dans le deuxième réacteur (9) à une température de 50 °C à 80 °C sous une pression absolue de 0,02 bar à 0,9 bar et extraire (k) la vapeur qui se forme.

11. Procédé selon la revendication 10, **caractérisé en ce que** la vapeur formée à l'étape e) est valorisée selon les étapes successives suivantes consistant à :
e1) transférer (k) la vapeur du deuxième réacteur (9) vers une deuxième colonne de lavage (10),
e2) mélanger (k') la vapeur avec de l'acide sulfurique ou de l'acide phosphorique pour former un ou plusieurs sulfates d'ammonium ou phosphates d'ammonium, une solution étant obtenue au pied de la colonne de lavage (10),
e3) transférer (e") la solution obtenue à l'étape e2) dans une cellule électrochimique (6) comportant un compartiment cathodique et un compartiment anodique, et électrolyser la solution, de l'acide sulfurique ou de l'acide phosphorique étant produit en vue de l'étape e2) dans le compartiment anodique,
e4) recirculer (k') l'acide sulfurique ou l'acide phosphorique produit à partir du compartiment anodique vers la colonne de lavage (4) et dériver (f) des substances valorisables formées dans le compartiment cathodique, en particulier une solution d'ammoniac.

12. Procédé selon la revendication 10 ou 11, **caractérisé en ce que** le milieu liquide obtenu après la dernière des étapes a) à e) - selon l'ordre, celui obtenu après l'étape c) ou celui obtenu après l'étape e) - est valorisé selon les étapes successives suivantes consistant à :
f) transférer (m), en particulier transférer en continu, le milieu liquide dans un troisième réacteur (13),
g) mélanger le milieu avec une huile caloporteuse et chauffer le milieu à une température de 220 °C à 380 °C, en particulier à 300 °C au maximum, de préférence à 230 °C au maximum, sous une pression absolue de 0,02 bar à 0,9 bar,
h) dériver (n) la vapeur formée à l'étape g) et utiliser la vapeur,
i) dériver (q) la suspension d'huile caloporteuse et de phase organique solide restante à l'étape h) et valoriser la suspension.

13. Procédé selon la revendication 12, **caractérisé en ce que** la vapeur dérivée de l'étape h) est valorisée selon les étapes successives suivantes consistant à :
hl) dériver (n) la vapeur formée dans une colonne de distillation (14), h2) refroidir la vapeur, en particulier par pulvérisation d'eau, dans la colonne de distillation (14) pour la condensation de composés organiques, h3) dériver (o) les composés organiques condensés à l'étape h2) et dériver la vapeur (p) restant à l'étape h2).

14. Procédé selon la revendication 12, **caractérisé en ce que** la suspension d'huile caloporteuse et de phase organique solide dérivée selon l'étape i) est valorisée selon les étapes successives suivantes consistant à :
i1) dériver (q) la suspension dans un séparateur (17) et amener (q') une phase contenant de l'eau, une phase aqueuse (21) et une phase (20) flottant sur celle-ci se formant dans le séparateur (17),
i2) recirculer (m') la phase (20) flottant dessus hors du séparateur (17) dans le troisième réacteur (13) et transférer la phase aqueuse (21) dans un dispositif de conversion (18),
i3) convertir des sels organiques polaires dissous dans la phase aqueuse (21) dans le dispositif de conversion (18) en composés organiques, en particulier en hydrocarbures et en dioxyde de carbone, ainsi qu'en hydrogène,
i4) recirculer (q') dans le séparateur (17) le milieu liquide obtenu à l'étape i3), qui est notamment la phase contenant de l'eau mentionnée à l'étape i).

15. Procédé selon la revendication 14, **caractérisé en ce que** la phase aqueuse (21) formée à l'étape i1), de préférence après avoir effectué au moins une fois les étapes i3) et i4), glisse (s) dans une cellule électrochimique (19) comprenant deux demi-cellules séparées l'une de l'autre par une membrane perméable aux ions de métal alcalin, et est électrolysée dans celle-ci.

16. Procédé selon l'une des revendications 1 à 11, **caractérisé en ce que** le milieu liquide obtenu à l'étape b), de préférence celui obtenu à l'étape c), est pyrolysé ou gazéifié à une température d'au plus 500 °C, notamment au moyen d'une gazéification à flux entraîné, d'une gazéification à lit fluidisé ou d'une gazéification à lit fixe, de préférence une gazéification à lit fixe à contre-courant, ou est brûlé.
